# EUROPEAN PATENT APPLICATION

(11) **EP 2 005 836 A2**
(43) Date of publication of application: **24.12.2008**
(21) Application number: 07739989.7
(22) Date of filing: 28.03.2007
(51) Int. Cl.: A23J 3/16, A21D 13/08

(54) **POWDERY SOY PROTEIN AND SOY PROTEIN-CONTAINING FOOD USING THE SAME**

(30) Priority: 31.03.2006 JP 2006100325
(71) Applicant: Fuji Oil Company, Ltd., Osaka-shi, Osaka 542-0086 (JP)
(72) Inventor: MURAOKA, Asami, Izumisano-shi, Osaka 598-8540 (JP); NISHI, Kotaro, Izumisano-shi, Osaka 598-8540 (JP); NAKAMURA, Yasushi, Izumisano-shi, Osaka 598-8540 (JP); SAKATA, Tetsuo, Izumisano-shi, Osaka 598-8540 (JP)
(74) Representative: Hayes, Adrian Chetwynd
(86) International application number: PCT/JP2007/056551
(87) International publication number: WO 2007/114129

(57) **Abstract**

It is intended to provide a soy protein-containing food (a baked food) which can be used in a large amount as a substitute for wheat flour and has an excellent flavor without showing a coarse texture. It is also intended to provide a non-baked food prepared without resorting to baking. Moreover, it is intended to provide a powdery soy protein suitable for these foods. Namely, a powdery soy protein **characterized by** having an NSI of from 10 to 55, a solubility in 0.22 M trichloroacetic acid (TCA) of from 6 to 30% and a CP of from 50 to 98%; and a soy protein-containing food (a baked food or a non-baked food) prepared by binding this soy protein with a binder and molding.

## Description

### Technical Field

The present invention relates to a powdery soy protein with excellent flavor, a process for producing the same, and a soy protein-containing food using the same.

### Background Art

It is expected for soy proteins to have a role as source of protein supply and anti-cholesterol effect. Soy proteins have been widely used as a raw material for health foods, such as powdered beverages and confectionery stating such a role and effect. However, soy proteins have high water absorbability and water retention, therefore soy proteins have the following problems: the blended dough becomes hard as time goes by; heat can not smoothly pass through the dough upon baking; and the mechanical durability is poor because of less extensibility of the dough, thereby clinging around a roller. Further, there is another problem that it is difficult to blend the soy protein into dough at high ratio due to the peculiar cereal smell. And yet, there is a problem that the texture becomes coarse when the soy protein is blended at high ratio.

For example, Patent Document 1 discloses baked confectionery blended with alkaline earth metal-binding soy protein. However, the soy protein to be used is not subjected to hydrolysis, and it is difficult to blend it at high ratio. When it is blended at high ratio, the texture becomes coarse.

Patent Document 2 discloses an invention that a confectionery food bar concomitantly using two types of soy protein substances (soy protein substance for structural use and soy protein substance for binding use) maintains softness over 35 days after its production. The soy protein substance for structural use is not subjected to hydrolysis, as well as not added alkaline earth metal substantially or added it merely in a small amount which is necessary for neutralization. The soy protein substance for binding use has higher hydrolysis rate and higher NSI than those of the powdery isolated soy protein of the present invention.

Patent Document 3 discloses baked food containing mainly of a soy protein, in which wheat flour in the raw material of wheat flour baked food is replaced with concentrated soy protein. However, the concentrated soy protein used therein is not subjected to enzymatic degradation, and solubility in TCA thereof is extremely low.

Patent Document 4 discloses a proocess for producing baked confectionery, which is characterized by using soy protein-containing material, tapioca starch and trehalose in dough of the baked confectionery. However, since the soy protein-containing material used therein is not subjected to enzymatic degradation except for peptides, solubility in TCA thereof is low, and NSI of the peptides is higher than that of the present invention. Patent Document 5 discloses baked food which contains wheat flour, oils and fats, proteins and dietary fibers, wherein a protein coated with said oils and fats dispersed in the wheat flour dough. However, the protein used therein has highly water absorbability, and thus different from the protein of the present invention, which is insolubilized, i.e., whose NSI is low.
Patent Document 1: JP 9-84511 A
Patent Document 2: JP 2005-287497 A
Patent Document 3: JP 2003-79309 A
Patent Document 4: JP 11-9176 A
Patent Document 5: JP 8-289714 A

### Disclosure of the Invention

### Problems to be solved by the Invention

An object of the present invention is to provide a powdery soy protein, which is allowed to use in large amount as a substitute of wheat flour, and gives a soy protein-containing food (baked food) with excellent flavor and free from coarse texture. Another object is to provide a powdery soy protein that gives a powdery soy protein-binding non-baked food free from coarse texture. Another object is to provide a soy protein-containing food (non-baked food and baked food) using the powdery soy protein, with excellent flavor and free from coarse texture.

### Means for Solving the Problem

The present inventors faced the following problems: when a conventional soy protein was used in dough for producing baked confectionery, the dough became dry and/or the dough was underbaked, resulting in producing baked confectionery whose appearance and texture were inferior to those of baked confectionery using wheat flour; and the soy protein absorbed moisture in the dough, causing the dough becoming hard as time goes by, and making the molding uneasy. Then, water absorbability of the soy protein was reduced by heating or the like, however there remained slightly coarse texture even in baked confectionery, and remained coarse texture markedly in the case of a non-baked food. The inventors have intensively studied, and found that these problems can be solved by not only reducing the water absorbability of the soy protein to be used, but also performing slightly hydrolysis. Thus, the present invention has been completed on the basis of these findings.

That is, the present invention is a powdery soy protein, which is characterized by having NSI of from 10 to 55, solubility in 0.22 M trichloroacetic acid (TCA) of from 6 to 30%, and CP of from 50 to 98%.

The powdery soy protein can contain 0.05 to 1.3% by weight of alkaline earth metal based on the solid content of the soy protein.

Further, the present invention is a soy protein-containing food, which is prepared by binding said soy protein with a binder and by molding.

Sugar can be used as the binder.

Oil or fat can be used as the binder.

Preferred sugar is gum substance.

The present invention is also a soy protein-containing baked food, which is prepared by replacing wheat flour with said soy protein and by baking.

### Effect of the Invention

The powdery soy protein of the present invention made it possible to blend the soy protein at high ratio into baked food using wheat flour or into non-baked food which does not need to contain wheat flour. Specifically, the present invention made it possible to replace most or entire wheat flour in a common wheat flour-made baked food with the soy protein. The present invention can also enrich alkaline earth metals such as Mg and Ca, depending on soy protein to be used.

### Best Mode for Carrying Out the Invention

First, the powdery soy protein of the present invention will be described. The powdery soy protein of the present invention is characterized in that the NSI is from 10 to 55, the solubility in 0.22 M TCA is from 6 to 30%, and the crude protein (CP) is from 50 to 98%. Specifically, the powdery soy protein of the present invention is characterized by that it is extremely low in the solubility and the protein is slightly hydrolyzed. From containing much insolubilized proteins, the water retention and water absorbability, inherent properties of soy proteins, are declined. The extent of solubility or insolubility is presented by the NSI (Nitrogen Solubility Index), and measured in accordance with the A.O.C.S method (Ba 11-65).

Proper NSI of the powdery soy protein of the present invention is from 10 to 55, preferably from 10 to 50, and further preferably from 20 to 40. When the NSI is high, there are problems that water absorbability of the soy protein increases, the soy protein absorbs moisture in the dough, the dough becomes hard as time goes by, and that molding becomes difficult. When the NSI is low, the texture becomes coarse in both non-baked and baked foods, due to insolubilized soy proteins.

One of the characteristics of the powdery soy protein of the present invention is that the protein is slightly hydrolyzed. Specifically, proper solubility in 0.22 M TCA of the powdery soy protein of the present invention is from 6 to 30%, preferably from 6 to 15%. The solubility in 0.22 M TCA of an unhydrolyzed powdery soy protein is generally 4% or less, and does not exceed 5% at the highest. The solubility in 0.22 M TCA denotes a value sought by removing a precipitate of high molecular protein components under a trichloroacetic acid solution, followed by quantifying low molecular protein components dissolving in the trichloroacetic acid solution by the Kjeldahl method. The measurement is performed in the same manner as that described in Example 1.

When the solubility in TCA is low, it becomes difficult to blend the soy protein into the non-baked and baked foods at high ratio. Particularly, as the NSI is getting lower, the texture is becoming more coarse. It is unable to solve the drawback that the dough is getting hard as time goes by in the case of a baked food mentioned in prior arts. When the solubility in TCA is high, there arise such drawbacks in the non-baked and baked foods that the adhesiveness of the dough during molding is high, and the dough goes slack after molding. When the dough is used for the baked food, there arises such a negative property that the texture becomes hard and glutinous.

Proper crude protein content (CP) of the powdery soy protein of the present invention is from 50 to 98%, preferably from 75 to 98%, and more preferably from 85 to 98%. When the CP value is low, the amount in terms of protein becomes small in the soy protein-containing food, even in the case of blending the soy protein into the dough at high ratio. Although it is preferable that the CP value is as high as possible, it is practically difficult to produce the soy protein with a purity exceeding 98%.

The NSI can be adjusted to the value of the present invention by adding alkaline earth metal, a process for producing will be described hereinafter. The non-baked and baked foods of the present invention also have an effect of enriching the alkaline earth metal. When both Ca and Mg are used, it is proper that the total amount of Ca and Mg accounts for 0.05 to 1.3% by weight.

In the case of Ca, the proper amount of the salt, hydroxide and/or oxide thereof is between 0.1 and 1.0% by weight, preferably between 0.5 and 0.9% by weight as the amount of Ca based on the solid content of the soy protein. In the case of Mg, the proper amount of the salt, hydroxide and/or oxide thereof is between 0.05 and 0.9% by weight as the amount of Mg based on the solid content of the soy protein. When alkaline earth metal is added in larger amount, it becomes more effective in terms of lowering of the NSI. However, excessive amount of the metal gives a taste of the metal salt itself, furthermore excessively low NSI of soy protein results a drawback of feeling more coarse texture when it is blended in the non-baked food or baked confectionery. Accordingly, it is effective to add the metal within the range shown above.

Next, a process for producing powdery soy protein of the present invention will be described. The present invention is a process for producing poorly soluble powdery soy protein, which is characterized by including the steps of heating slightly acidic aqueous solution/slurry of the soy protein in the coexistence of alkaline earth metal compound, and slightly degrading the soy protein with a protease.

Preferred soy protein is soy milk protein or isolated protein.

Preferred alkaline earth metal compound is salt, oxide or hydroxide thereof.

Amount of the alkaline earth metal compound is properly from 0.05 to 1.3% by weight as the alkaline earth metal based on the soy protein (CP).

Preferred slight acidity is at pH 5.5 to 6.9.

Preferred heating temperature is from 100 to 150°C.

The present invention is poorly soluble powdery soy protein which has NSI of from 10 to 55, and solubility in 0.22 M TCA of the final soy protein of from 6 to 30%.

The powdery soy protein of the present invention is a body material of a food with high protein content.

The powdery soy protein of the present invention is prepared by combination of a method for lowering NSI and a method for slightly hydrolysis using enzyme or the like. A method of heating powdery soy protein by roasting or the like and a method of heating protein for thermal denaturation before spray drying into a powdery state are available as a method for lowering NSI of the powdery soy protein of the present invention is from 10 to 55, preferably from 10 to 50, and more preferably from 20 to 40. It is also allowed to heat the protein under the presence of alkaline earth metal or under acidic conditions, for carrying out thermal denaturation of the protein effectively before spray drying. Preferably, it is proper to prepare the poorly soluble powdery soy protein by the process, which is characterized by including the steps of heating slightly acidic aqueous solution/slurry of the soy protein in the coexistence of alkaline earth metal compound, and slightly degrading the soy protein with a protease.

In order to adjust the crude protein (CP) of the powdery soy protein of the present invention from 50 to 98%, preferably from 75 to 98%, and more preferably from 85 to 98%, isolated soy protein, powdered fat-free soy milk or other proteins can be used as the raw material protein which is lowered NSI thereof and subjected to enzymatic degradation. It is also possible to adjust the crude protein content to an intended value by blending these soy proteins in a proper manner. It is not preferred to use bean curd refuse or concentrated soy protein for the CP adjustment use, since the component of the bean curd refuse gives coarse texture, although the effect differs depending on soy protein-containing foods of the present invention, such as the non-baked or baked foods.

An example of the process for production, in which the NSI is lowered by thermal denaturation of the soy protein solution, apart from roasting, will be described below, but the process for production is not limited thereto. The powdery soy protein of the present invention is prepared by the process, which includes the steps of heating slightly acidic aqueous solution/slurry of the soy protein in the coexistence of alkaline earth metal compound, and slightly degrading the soy protein with a protease.

It is preferred that the alkaline earth metal compound is salt, oxide or hydroxide thereof. In other words, the alkaline earth metal to be used may be Ca compound (hydroxide, oxide or salt), Mg compound (hydroxide, oxide or salt) or mixture thereof. Preferably, in the present invention, it is proper to use alkaline earth metal compound in amount that is equal to or exceeds the amount necessary for neutralization, so that salt or oxide is preferred rather than hydroxide.

The proper amount of the alkaline earth metal compound is from 0.05 to 1.3% by weight as the amount of the alkaline earth metal, based on the soy protein (CP). Specifically, the amount of Ca compound is generally from 0.1 to 1.0%, preferably from 0.5 to 0.9%, as amount of Ca, based on the soy protein solid content, while the amount of Mg compound is generally from 0.05 to 0.9%, preferably from 0.2 to 0.5%, as amount of Mg, based on the soy protein solid content, although the amount may fluctuate depending on heating temperature. When Ca and Mg are used concomitantly, proper amount of them is from 0.05 to 1.3% by weight as total amount of Ca and Mg.

When alkaline earth metals are added in larger amount, it becomes more effective in terms of lowering of the NSI. However, excessive amount of the metal gives a taste of the metal salt itself, furthermore excessively low NSI of soy protein results a drawback of feeling more coarse texture when it is blended in dough product or baked confectionery. Accordingly, it is effective to add the metal within the range shown above.

The concentration of the solid matters in the soy protein solution is not particularly limited, as long as the solution has fluidity. In view of spray drying, it can generally be from 7 to 16% by weight.

The present invention requires the step of heating slightly acidic aqueous solution/slurry of the soy protein. Preferred slight acidity is at pH 5.5 to 6.9 for lowering the NSI. Higher pH value makes it difficult to lower the NSI. While lower pH value does not cause any problem for lowering the NSI, it is preferred that pH is 5.5 or higher because it may give an acidic taste when the soy protein of the present invention is directly spray dried to make powder, after heating or degrading the protein with an enzyme.

It is preferred that the heating temperature is from 100 to 150°C for reducing the NSI. Public known method for thermal denaturation of the soy protein can be applied for the heating procedure. For instance, indirect heating, direct heating or dielectric heating can be applied. While the heating temperature may differ depending on heating method, it is preferred to heat the soy protein enough to perform thermal denaturation of the soy protein. Followings can serve as indication in the heating procedure of the soy protein solution, although the heating temperature and time are not always determined by such factors as existence or non-existence of the alkaline earth metal, pH of the solution and heating method.

In the case of an alkaline earth metal-binding soy protein solution, it is preferred to perform high temperature treatment from 5 seconds to 10 minutes at the heat treatment temperature of 100 to 155°C. As stated above, it is proper to adjust the pH from 5.5 to 6.9, preferably from 6.0 to 6.7, and more preferably from 6.3 to 6.5, as one of the methods for accelerating thermal denaturation of the soy protein.

In order to adjust the solubility in 0.22 M TCA of the powdery soy protein of the present invention from 6 to 30%, preferably from 6 to 15%, the soy protein can be subjected to hydrolysis in an aqueous system using a protease or the like, before spray drying. The protease is selected from metal protease, acidic protease, thiol protease and serine protease, and one or more different proteases selected therefrom can be acted in order or simultaneously.

Examples of the metal protease include Bacillus neutral proteinase, Streptomyces neutral proteinase, Aspergillus neutral proteinase and thermoase. Examples of the acidic protease include pepsin, Aspergillus acidic proteinase and Sumizyme AP. Examples of the thiol protease include bromerain and papain. Examples of the serine protease include trypsin, chymotrypsin, subtilisin, Streptomyces alkaline proteinase, Aspergillus alkaline proteinase, Alcalase and Bioprase. When the heating procedure is performed through 2 or 3 stages to serve as deactivation of the enzyme, the NSI can be lowered efficiently. Thus, the powdery soy protein is prepared by spray drying of the soy protein solution which is performing thermal denaturation to lower the NSI and subjecting to slightly hydrolysis using an enzyme.

Next, the soy protein-containing food of the present invention will be explained. Examples of the soy protein-containing food include baked foods such as cookies and non-baked foods such as nougat bars. First, the non-baked food will be explained. The non-baked food of the present invention is prepared by binding the soy protein of the present invention with a binder and by molding.

Sugars (preferably gum substance) and oils and fats can be used as the binder. It is naturally discretional whether to use food additives and/or physiologically active substances such as vitamins and minerals, in addition to the soy protein and the binder.

The ratio of the soy protein contained in the non-baked food of the present invention is not particularly limited, however it is generally from 5 to 80% by weight, and preferably from 10 to 60% by weight. It is possible that the rest is all binder, however the content of the binder is practically less than that because the non-baked food generally includes other food ingredients and additives.

The sugars include not only those of relatively low molecular weight, from monosaccharides to oligosaccharides, but also less sweet polysaccharides. Examples of the polyssacharides to be used include those originated from starch, plant polysaccharides and those produced by fungi such as cellulose, ethyl cellulose, hemicellulose and dextrin. Starch and modified starch can also be used. Water-soluble dietary fibers originated from soybeans or corn (water-soluble himicellulose) and pullulan produced by fungi can be also used. Further, sugar alcohols such as sorbitol and xylitol can be also used.

Among sugars, it is preferred to use gum substance alone or with the above sugars in combination. Examples of the gum substance include known gum substances, such as xanthan gum, gum arabic, guar gum, carrageenan, locust bean gum, arabinogalactan, ghatti gum and hydrolysates thereof.

Preferred oils and fats are those solid at room temperature and those with viscosity at room temperature. Chocolate and ganache using these oils and fats can be used as well. Lecithin, which is phospholipid, can be also used as far as the flavor permits. Further, emulsions of sugars and oils and fats can be used as the binder.

In order to bind the powdery soy protein of the present invention and other materials and/or food additives, as needed, with the binder, all the ingredients can be mixed using a known mixer. It is discretional whether the ingredients are heated or not after mixing.

Then, the mixture can be molded into proper size for ingestion, through known molding meatods such as putting it in a die or extrusion. It is also possible that dough, which is prepared by mixing the binder and the powdery soy protein with a mixer, is flattened and cut out using a cutting machine. When the dough has viscosity at room temperature, it can be chilled to solidify before cutting. Further, it is possible to perform binding at high temperature (generally not higher than boiling point), and the temperature is lowered to that of which the mixture is solidified, such as room temperature, before cutting. While the mixture can be molded into any shape, it can be molded in bar shape allowing athletes to eat easily after exercise for protein supplement, or in bite size allowing elderly persons to eat easily. It can be also molded into hollow shape to ensure safety even in the case where elderly persons or children swallow it whole.

Next, the baked food will be explained. The baked food of the present invention can be obtained by replacing some or entire wheat flour of wheat flour-made baked food with the powdery soy protein of the present invention. Examples of the wheat flour-made baked food include cookies, crackers, rice crackers, hot cakes and bread, and novel-shape baked food such as those in a bar shape. In the wheat flour-made baked food, the powdery soy protein of the present invention can be replaced for wheat flour from 10% to whole amount, preferably from 30 to 80%, and more preferably from 30 to 60%. If the ratio of the powdery soy protein is low, the food may not be called as a soy protein-enriched food.

### Examples

Hereinafter, embodiments of the present invention will be described in particular by examples. However, the technical scope of the present invention is not limited to the following Examples.

### Example 1

To 10 parts by weight of low-modified defatted soybeans manufactured by Fuji Oil Co., Ltd., 15 times the soybeans of water was added. After adjusting the mixture to pH 7.5 with 1N NaOH, the mixture was stirred at room temperature for 1 hour using a Homomixer to perform extraction, followed by the bean curd refuse component was removed by using a centrifugal machine (1,000 g × 10 minutes) to obtain fat-free soy milk. The milk was adjusted to pH 4.5 by adding 1N HCl, the protein component was precipitated at the isoelectric point, and the precipitate was recovered by centrifugation, so as to obtain an isolated soy protein curd. The solid content of the curd was about 30% by weight. Water was added to the curd in an amount satisfying the solid content to be 13% by weight, magnesium oxide was added thereto in an amount of 0.6% by weight (0.36% by weight as Mg) per solid content of soy protein, and the resultant solution was neutralized to pH 6.4 using sodium hydroxide. Then, the neutralized protein solution was subjected to heat treatment at 150°C for 1 minute using a VTIS pasteurizer (manufactured by Alfa Laval Co.) to obtain a protein-denaturalized soy protein solution.

"Protin AC", a protease manufactured by Daiwa Kasei Co., Ltd., was added to the soy protein solution in an amount of 0.05% by weight per soy protein solid content, and hydrolysis of the protein was carried out at a reaction temperature of 55°C for 15 minutes. After enzymatic hydrolysis, the solution was subjected to heat treatment once more at 150°C for 7 seconds using a VTIS pasteurizer and spray dried, so as to obtain a powdery soy protein A. The powdery soy protein A has solubility in TCA of 11%, NSI of 32, and CP of 92%.

Hereinafter, a measurement method of solubility in 0.22 M TCA will be explained. An extract of an NSI was mixed with an equal amount of 0.44 M TCA solution, and heated in thermostatic bath at 37°C for 30 minutes. After heating, the mixture was filtered (using filter paper No. 6), and the filtrate was placed in Kjeldahl tube. The total nitrogen amount (TCA-soluble nitrogen) in the filtrate was quantified by the Kjeldahl method. Calculation was done in accordance with the following equation: solubility in TCA = TCA-soluble nitrogen/total nitrogen in the sample × 100(%).

### Example 2 (Protein with different NSI)

Powdery soy proteins with different NSI were prepared by adding magnesium oxide in an amount of 0.8% by weight (B) or 0.5% by weight (C), respectively, in the same production process as in Example 1. The powdery soy protein B has solubility in TCA of 10% and NSI of 17, while the powdery soy protein C has solubility in TCA of 10% and NSI of 45.

### Comparative Example 1 (Protein with different NSI)

Powdery soy protein with different NSI, powdery soy protein D (solubility in TCA: 10%, NSI: 8) and powdery soy protein E (solubility in TCA: 10%, NSI: 60) were prepared by adding magnesium oxide in an amount of 1.0% by weight (D) or 0.3% by weight (E), respectively, in the same production process as in Example 1.

### Example 3 (Protein with different solubility in TCA)

Powdery soy protein F (solubility in TCA: 22%, NSI: 30) with different solubility in TCA was prepared by adding an enzyme in an amount of 0.25% by weight in the same production process as in Example 1.

### Comparative Example 2 (Protein with different solubility in TCA)

Powdery soy protein G (solubility in TCA: 3%, NSI: 30) added with no enzyme and powdery soy protein H (solubility in TCA: 40%, NSI: 30) added with an enzyme in an amount of 0.45% by weight were prepared in the same production process as in Example 1.

### Comparative Example 3 (Concentrated soy protein)

To low-modified defatted soybeans, 60% by volume of hydrous ethanol was added in an amount of 7 times the soybeans. The mixture was washed by propeller stirring at 20°C for 1 hour, performed solid-liquid separation by vacuum filtration, and then subjected to drying procedure to remove the solvent, by placing the undried defatted soybeans in hot air at 120°C as inlet temperature and feeding it out at 67°C as outlet temperature using a Flash Jet Dryer, so as to obtain concentrated soy protein. It has solubility in TCA of 4% and NSI of 65 (Concentrated soy protein I).

### Example 4 (Non-baked food)

50 parts by weight of each of the powdery soy protein in Examples 1 to 3 and 50 parts by weight of liquid sugar were mixed with Kenwood mixer to produce dough, and the flattened dough was chilled in a freezer for 20 minutes. The dough was cut into pieces to make non-baked bars, and evaluated respectively. The symbols in the tables denote that ⊙: very good, ○: good, △: slightly good and ×: poor. Specifically, dough whose workability is clumped together easily and less adhesive was rated as good, dough whose diachronic change in hardness is on the same level as that produced using only wheat flour was rated as very good, and dough whose texture was not hard and coarse and free from glutinosity was rated as good. Hereinafter, the evaluation was performed in the same manner.

### Comparative Example 4 (Non-baked food)

Using the powdery soy proteins prepared in the same manner as in Comparative Examples 1 to 3, soy protein bars were prepared in the same manner as in Example 4.

**(Table 1) Evaluation of bars (non-baked food)**

| | Example | | | | Comparative Example | | | | | Wheat flour |
|---|---|---|---|---|---|---|---|---|---|---|
| | A | B | C | F | D | E | G | H | I | |
| Enzyme level | 0.05 | 0.05 | 0.05 | 0.25 | 0.05 | 0.05 | 0 | 0.45 | - | - |
| Mg oxide (%) | 0.6 | 0.8 | 0.5 | 0.6 | 1.0 | 0.3 | 0.6 | 0.6 | - | - |
| Solubility in TCA (%) | 11 | 10 | 10 | 22 | 10 | 10 | 3 | 40 | 4 | - |
| NSI | 32 | 17 | 45 | 30 | 8 | 60 | 30 | 30 | 65 | - |
| Workability | ⊙ | ⊙ | ⊙ | ⊙ | ⊙ | Δ | Δ | × | Δ | ⊙ |
| Adhesion | ○ | ○ | ○ | △ | ○ | ○ | ○ | × | ⊙ | ⊙ |
| Diachronic change in hardness of dough | ⊙ | ⊙ | ○ | ⊙ | ⊙ | × | × | ⊙ | × | ⊙ |
| Possible amount to be replaced for wheat flour | Total amount | Total amount | Total amount | Total amount | Total amount | 70% | 70% | Total amount | 50% | - |
| Flavor | ○ | ○ | ○ | ○ | ○ | ○ | ○ | ○ | Δ | ○ |
| Food texture Coarse texture | ○ | Δ | ○ | Δ | × | ○ | ○ | × | ○ | ○ |

### Example 5 (Baked food)

A powdery soy protein prepared in the same manner as in Examples 1 to 3 and liquid sugar were mixed with Kenwood mixer, to which shortening and then wheat flour were added, and further mixed to prepare dough. The resultant dough was molded into shape of 30 mm in diameter and 5 mm in thickness, and baked with oven at 160°C for 14 minutes. Comparative Example 5 (Baked food) Using powdery soy proteins prepared in the same manner as in Comparative Examples 1 to 2, baked bars were prepared in the same manner as in Example 5.

**(Table 2) Evaluation of bars (baked food)**

| | Example | | | | Comparative Example | | | | |
|---|---|---|---|---|---|---|---|---|---|
| | A | B | C | D | E | F | G | H | I |
| Workability | ⊙ | ⊙ | ○ | ○ | × | Δ | Δ | × | Δ |
| Adhesion | ○ | ○ | ○ | Δ | ⊙ | ○ | ○ | × | ⊙ |
| Diachronic change in hardness of dough | ⊙ | ⊙ | ○ | ⊙ | ⊙ | × | × | ⊙ | × |
| Flavor | ○ | ○ | ○ | ○ | ○ | ○ | ○ | ○ | △ |
| Food texture Coarse texture | ○ | Δ | ○ | ○ | × | ○ | ○ | × | ○ |
| Smoothness of passing heat | ○ | ○ | Δ | ○ | ○ | × | ○ | ○ | × |

### Industrial Applicability

The powdery soy protein of the present invention made it possible to blend the soy protein at high ratio into baked foods using wheat flour or into non-baked foods which does not need to contain wheat flour. Specifically, the present invention made it possible to replace most or entire wheat flour in a common wheat flour-made product with the soy protein. The present invention can also enrich alkaline earth metals such as Mg and Ca, depending on soy protein to be used.

The alkaline earth metal-binding soy protein has superior flavor and has extremely less odor unique to soybeans compared to conventional soy proteins, therefore it makes foods tasty even if it is used for non-baked foods. It should be appreciated that baked foods using the soy protein also excel in flavor. These foods enriched with the soy protein can provide protein-enriched, adequately chewy foods to athletes and elderly persons with declined digestive functions.

## Claims

1. A powdery soy protein, which is **characterized by** having NSI of from 10 to 55, solubility in 0.22 M trichloroacetic acid (TCA) of from 6 to 30%, and CP of from 50 to 98%.

2. The powdery soy protein according to claim 1, which comprises alkaline earth metals in an amount of 0.05 to 1.3% by weight based on the solid content of the soy protein.

3. A soy protein-containing food, which is prepared by binding the soy protein according to claim 1 or 2 with a binder and by molding.

4. The soy protein-containing food according to claim 3, wherein the binder is sugar.

5. The soy protein-containing food according to claim 3, wherein the binder is oil or fat.

6. The soy protein-containing food according to claim 4, wherein the sugar is a gum substance.

7. A soy protein-containing baked food, which is prepared by replacing wheat flour with the soy protein according to claim 1 or 2 and by baking.
